# EUROPÄISCHE PATENTSCHRIFT

(11) **EP 4 182 203 B1**
(45) Veröffentlichungstag und Bekanntmachung des Hinweises auf die Patenterteilung: **18.09.2024**
(21) Anmeldenummer: 21746469.2
(22) Anmeldetag: 19.07.2021
(51) Int. Cl.: B62D 3/12

(54) **PROGRESSIVES LENKGETRIEBE, GEZACKTES BAUTEIL UND HERSTELLUNGSVERFAHREN**
PROGRESSIVE STEERING GEAR, SERRATED COMPONENT, AND PRODUCTION METHOD
MÉCANISME DE DIRECTION PROGRESSIVE, COMPOSANT DENTELÉ ET PROCÉDÉ DE PRODUCTION

(30) Priorität: 20.07.2020 DE 102020119089
(43) Veröffentlichungstag der Anmeldung: 24.05.2023
(73) Patentinhaber: Bless, Werner, 8630 Rüti (CH)
(72) Erfinder: Bless, Werner, 8630 Rüti (CH)
(74) Vertreter: Dendorfer, Claus
(86) Internationale Anmeldenummer: PCT/EP2021/070184
(87) Internationale Veröffentlichungsnummer: WO 2022/018045

(56) Entgegenhaltungen:
- WO-A1-2006/079492
- DE-A1- 102009 000 969
- GB-A- 2 114 702
- JP-A- 2006 137 256

## Beschreibung

Die Erfindung betrifft allgemein das technische Gebiet der Fahrzeuglenkungen und insbesondere das Gebiet der progressiven Lenkungen und/oder Zahnstangenlenkungen.

Progressive Lenkungen sind in den unterschiedlichsten Ausgestaltungen gut bekannt. So zeigt beispielsweise die WO 2006/079492 A1 diverse Ausführungsformen eines progressiven Getriebes. Gemäß einer Ausführungsform, die sich in der Praxis als besonders vorteilhaft herausgestellt hat, weist ein progressives Lenkgetriebe drei geneigte und in unterschiedlichen Ebenen befindliche Zahnstangen und drei zugeordnete Stirnzahnräder auf. In Lenkpositionen auf einer Seite einer Mittelstellung kommt das mittlere der Stirnzahnräder mit der mittleren Zahnstange in Eingriff, während in Lenkpositionen auf der anderen Seite der Mittelstellung die beiden äußeren Stirnzahnräder mit den beiden äußeren Zahnstangen in Eingriff kommen.

Die gerade kurz beschriebene Ausführungsform gemäß der WO 2006/079492 A1 hat sich in der Praxis bereits als sehr vorteilhaft erwiesen. Im Zuge umfangreicher Arbeiten und Erprobungen konnten jedoch weitere Verbesserungen gefunden werden, insbesondere, aber nicht ausschließlich, im Hinblick auf ein besonders harmonisches Fahrgefühl und/oder eine kostengünstige Herstellung. Diese Verbesserungen sind Gegenstand des vorliegenden Dokuments.

Die Erfindung ist durch die unabhängigen Ansprüche definiert. Die abhängigen Ansprüche betreffen optionale Merkmale einiger Ausgestaltungen der Erfindung.

Ein erster Aspekt der Erfindung betrifft ein gezacktes Bauteil zur Verwendung in einem progressiven Lenkgetriebe, mit einer ersten und einer zweiten geneigten Zackenrampe, die eine Mehrzahl von Zacken mit je einem ersten Flankenwinkel und einem zweiten Flankenwinkel bezüglich einer normal zu einer Längsrichtung des gezackten Bauteils verlaufenden Mittelebene aufweisen. Für zumindest 50% der Zacken weisen die ersten Flankenwinkel einen einzigen ersten Winkelwert auf, und die zweiten Flankenwinkel weisen einen einzigen zweiten Winkelwert auf, wobei der erste Winkelwert einer Spiegelung des zweiten Winkelwerts an der Mittelebene entspricht.

Es hat sich gezeigt, dass die erfindungsgemäße Verwendung von Zacken statt der bei Zahnstangenlenkungen üblichen Zähnen beträchtliche Vorteile bietet. Die einheitlichen und gegenüber der Mittelebene symmetrischen Flankenwinkel führen zu einem besonders harmonischen und sicheren Lenkgefühl und/oder ermöglichen eine relativ kostengünstige Herstellung. Diese Ergebnisse sind überraschend, weil sie den über viele Jahrzehnte hinweg durchgeführten Berechnungen und Optimierungen von Zahngeometrien, insbesondere auf dem Gebiet der Zahnstangenlenkungen, zuwiderlaufen.

Weitere Aspekte der Erfindung betreffen ein progressives Lenkgetriebe, ein Verfahren zur Herstellung eines gezackten Bauteils, und ein Verfahren zur Herstellung eines Lenkgetriebes.

Weitere Merkmale, Vorteile und Aufgaben der Erfindung ergeben sich aus den beigefügten schematischen Zeichnungen mehrerer Ausführungsbeispiele. In den Zeichnungen zeigen:
Fig. 1 eine Seitenansicht eines gezackten Bauteils und eines Ritzelbauteils gemäß einem ersten Ausführungsbeispiel der Erfindung,
Fig. 2 eine perspektivische Ansicht von Bauteilen eines progressiven Lenkgetriebes gemäß einem zweiten Ausführungsbeispiel der Erfindung, das sich nur geringfügig von dem in Fig. 1 gezeigten ersten Ausführungsbeispiel unterscheidet,
Fig. 3 eine vergrößerte Darstellung der Zackengeometrie in dem ersten und zweiten Ausführungsbeispiel,
Fig. 4 eine Seitenansicht ähnlich wie in Fig. 1 in einem dritten Ausführungsbeispiel mit steileren Flankenwinkeln der Zacken,
Fig. 5 eine Seitenansicht ähnlich wie in Fig. 1 in einem vierten Ausführungsbeispiel, bei dem das gezackte Bauteil keinen Mittelzacken aufweist,
Fig. 6 eine auseinandergezogene Darstellung eines Ritzelbauteils und zugeordneter Komponenten in einem weiteren Ausführungsbeispiel,
Fig. 7 eine schematische Darstellung zur Veranschaulichung der Auslegung eines Ritzelelements,
Fig. 8 und Fig. 9A je eine vergrößerte Seitenansicht zur Veranschaulichung des Ablaufverhaltens in dem ersten und zweiten Ausführungsbeispiel,
Fig. 9B eine vergrößerte Seitenansicht ähnlich wie in Fig. 9A in einem Vergleichsbeispiel,
Fig. 10A eine schematische Seitenansicht in dem ersten und zweiten Ausführungsbeispiel der Erfindung,
Fig. 10B eine schematische Seitenansicht einer Zahnstange in einem Vergleichsbeispiel, wobei der Maßstab ähnlich wie in Fig. 10A gewählt ist,
Fig. 11 eine perspektivische Ansicht eines Lenkgetriebes gemäß einem weiteren Ausführungsbeispiel der Erfindung, und
Fig. 12 eine perspektivische Ansicht wie in Fig. 11, wobei nur das gezackte Bauteil und das Ritzelbauteil dargestellt sind.

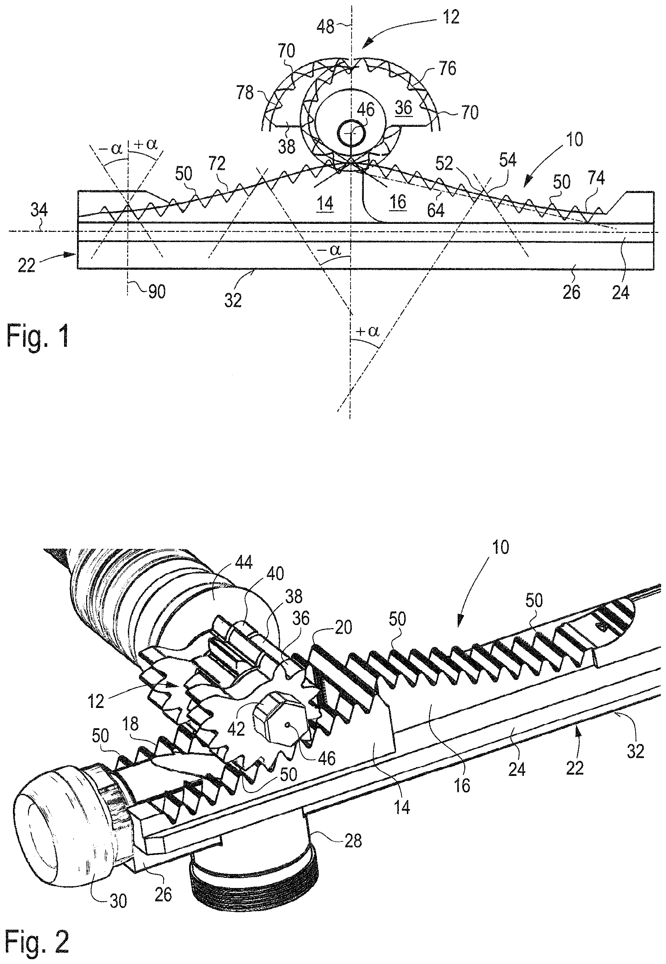

Ein progressives Lenkgetriebe gemäß den in den Zeichnungsfiguren beispielhaft gezeigten Ausführungsformen weist ein gezacktes Bauteil 10 und ein Ritzelbauteil 12 auf. Das gezackte Bauteil 10 beinhaltet eine erste, eine zweite und eine dritte Zackenrampe 14, 16, 18, die in der seitlichen Blickrichtung auf das Bauteil 10 gemäß Fig. 1 in drei Ebenen hintereinander angeordnet sind. Die erste Zackenrampe 14 ist in Fig. 1 links sichtbar. Die zweite Zackenrampe 16 ist in Fig. 1 rechts größtenteils sichtbar, nämlich bis auf einen Mittelzacken 20 (Fig. 2), an dem sich die erste und die zweite Zackenrampe 14, 16 überlappen. Die dritte Zackenrampe 18 ist in Fig. 2 zum Teil sichtbar, aber in Fig. 1 vollständig von der ersten Zackenrampe 14 verdeckt, die in der Seitenansicht von Fig. 1 identische Konturen wie die dritte Zackenrampe 18 aufweist und sich genau vor dieser befindet.

Während die in Fig. 1 und Fig. 2 gezeigten Ausführungsbeispiele einen Mittelzacken 20 beinhalten, der allen drei Zackenrampen 14, 16, 18 gemeinsam ist, sind auch Ausführungsformen vorgesehen, bei denen sich die zweite Zackenrampe 16 nicht mit der ersten und der dritten Zackenrampe 14, 18 überlappt, sowie Ausführungsformen, bei denen sich die Überlappung über mehrere mittlere Zacken - beispielsweise zwei oder drei Zacken - erstreckt.

Die Zackenrampen 14, 16, 18 sind im vorliegenden Ausführungsbeispiel einstückig mit einer Basis 22 ausgebildet, die Seitenabschnitte 24 und einen unteren Trägerabschnitt 26 aufweist. Der Trägerabschnitt 26 kann beispielsweise einen rechteckigen oder schwalbenschwanzförmigen Querschnitt aufweisen. In dem in Fig. 2 gezeigten Ausführungsbeispiel wird der Trägerabschnitt 26 von einem federbelasteten Andruckelement 28 geführt und gegen das Ritzelbauteil 12 gedrückt. Beispielsweise kann das Andruckelement 28 einen Federweg von mindestens 0,1 mm oder mindestens 0,2 mm bereitstellen. Das Lenkgetriebe ist derart ausgelegt, dass sich das gezackte Bauteil 10 um diesen Federweg gegenüber dem Ritzelbauteil 12 zu bewegen vermag. Auf beiden Seiten weist das gezackte Bauteil 10 in an sich bekannter Weise je einen Anschluss - z.B. je ein Schraubgewinde - zur Verbindung mit je einem Gelenkstück einer Spurstange auf; in Fig. 2 ist beispielhaft ein solches Gelenkstück 30 gezeigt.

In manchen Ausgestaltungen ist - bis auf die Führung durch die Spurstangen, das Andruckelement 28 und das Ritzelbauteil 12 - keine weitere Führung des gezackten Bauteils 10 in einem (in den Figuren nicht gezeigten) Gehäuse des Lenkgetriebes vorgesehen. In anderen Ausführungsbeispielen dienen jedoch zusätzlich die Seitenabschnitte 24 zur Führung des gezackten Bauteils 10 in dem Gehäuse des Lenkgetriebes. Derartige Lenkgetriebe mit einem durch die Seitenabschnitte 24 geführten gezackten Bauteil 10 sind besonders stabil.

In den hier beschriebenen Ausführungsbeispielen bildet eine Unterseite des Trägerabschnitts 26 - und somit der Basis 22 - eine flache Basisebene 32, die sich parallel zu einer Längsrichtung 34 des gezackten Bauteils 10 erstreckt. Somit verlaufen sowohl die Längsrichtung 34 als auch die Basisebene 30 in derjenigen Richtung, in der das gezackte Bauteil 10 bei Lenkbewegungen hin und her verschoben wird.

Entsprechend dem gezackten Bauteil 10 mit seinem in drei Ebenen angeordneten Zackenrampen 14, 16, 18 weist das Ritzelbauteil 12 ein erstes, ein zweites und ein drittes Ritzelelement 36, 38, 40 auf, die sich in denselben drei Ebenen befinden. Die drei Ritzelelemente 36, 38, 40 sind zueinander starr und drehfest auf einem Lenkwellen-Endstück 42 angeordnet, das seinerseits in einem Lenkwellenlager 44 gelagert ist. Das Lenkwellen-Endstück 42 zusammen mit dem darauf befindlichen Ritzelbauteil 12 ist auf an sich bekannte Weise über mehrere Abschnitte einer Lenkwelle und/oder Lenksäule (nicht gezeigt) mit einem Lenkrad (nicht gezeigt) gekoppelt, so dass Lenkbewegungen eine entsprechende Drehung des Ritzelbauteils 12 hervorrufen. Hierbei drehen sich sowohl das Lenkwellen-Endstück 42 als auch die drei Ritzelelemente 36, 38, 40 um eine gemeinsame Drehachse 46.

In den hier beschriebenen Ausführungsbeispielelen weist das erste Ritzelelement 36 in der Seitenansicht von Fig. 1 einen mit dem dritten Ritzelelement 40 identischen Umriss auf, so dass das erste Ritzelelement 36 das dritte Ritzelelement 40 genau verdeckt. Das zweite Ritzelelement 38 ist ungefähr oder genau spiegelsymmetrisch zu dem ersten und dem dritten Ritzelelement 36, 40 ausgebildet. Ferner ist in den hier beschriebenen Ausführungsbeispielen das erste Ritzelelement 36 ebenso dick wie das dritte Ritzelelement 40, aber nur halb so dick wie das zweite Ritzelement 38. Entsprechendes gilt für die erste Zackenrampe 14, die ebenso dick wie die dritte Zackenrampe 18, aber nur halb so dick wie die zweite Zackenrampe 16 ist.

Das erste Ritzelelement 36 ist dazu eingerichtet, sich in Lenkpositionen, bei denen ein Lenkrad aus Sicht des Fahrers relativ zu der Mittelstellung im Uhrzeigersinn eingeschlagen ist - wie dies z.B. in Fig. 2 der Fall ist - in Eingriff mit der ersten Zackenrampe 14 zu befinden. Wird das Lenkrad dann gegen den Uhrzeigersinn gedreht, so bewegt sich das gezackte Bauteil 10 in der in Fig. 2 dargestellten Orientierung nach links, bis das erste Ritzelelement 26 außer Eingriff mit der ersten Zackenrampe 14 kommt und sich in dem Leerraum rechts der ersten Zackenrampe 14 frei dreht. Diese Verschiebung des gezackten Bauteils 10 in seiner Längsrichtung 34 wird in eine entsprechende Lenkbewegung der Fahrzeugräder umgesetzt; die Richtung der Lenkbewegung (also, ob die Fahrzeugräder in Fahrtrichtung nach rechts oder links einschlagen) hängt von der Einbaulage des Lenkgetriebes ab.

Das dritte Ritzelelement 40 und die dritte Zackenrampe 18 verhalten sich wie das erste Ritzelelement 36 und die erste Zackenrampe 14. Das zweite Ritzelelement 38 dreht sich dagegen in der in Fig. 2 gezeigten Position frei und kommt, wenn das Lenkrad von dieser Position aus gegen den Uhrzeigersinn gedreht wird, ab ungefähr der Mittelstellung des Lenkrades in Eingriff mit der zweiten Zackenrampe 16, nämlich zunächst mit dem Mittelzacken 20 und dann mit den in Fig. 2 weiter rechts gezeigten Zacken.

Die Zackenrampen 14, 16, 18 sind jeweils geneigt, und zwar die zweite Zackenrampe 16 in entgegengesetzter Orientierung wie die erste und die dritte Zackenrampe 14, 18. Eine Mittelebene 48 ist normal zu der Basisebene 32 und der Längsrichtung 34 angeordnet. In den hier beschriebenen Ausführungsformen bildet die Mittelebene 48 eine Symmetrieebene bezüglich der allgemeinen Neigung der Zackenrampen 14, 16, 18. In manchen Ausgestaltungen stellt die Mittelebene 48 eine exakte Symmetrieebene dar. Es sind jedoch auch Ausgestaltungen vorgesehen, bei denen die Zackenrampen 14, 16, 18 nicht ganz spiegelsymmetrisch zueinander ausgebildet sind und somit die Mittelebene 48 nur ungefähr eine Symmetrieebene ist. In manchen Ausführungsformen ist ein Mittelzacken 20 vorhanden, und die Mittelebene 48 verläuft durch eine Spitze dieses Mittelzackens 20. Ferner verläuft in manchen Ausführungsformen die Mittelebene 48 durch die Drehachse 46 des Ritzelbauteils 12, wenn sich das Lenkgetriebe in einer Mittelstellung befindet.

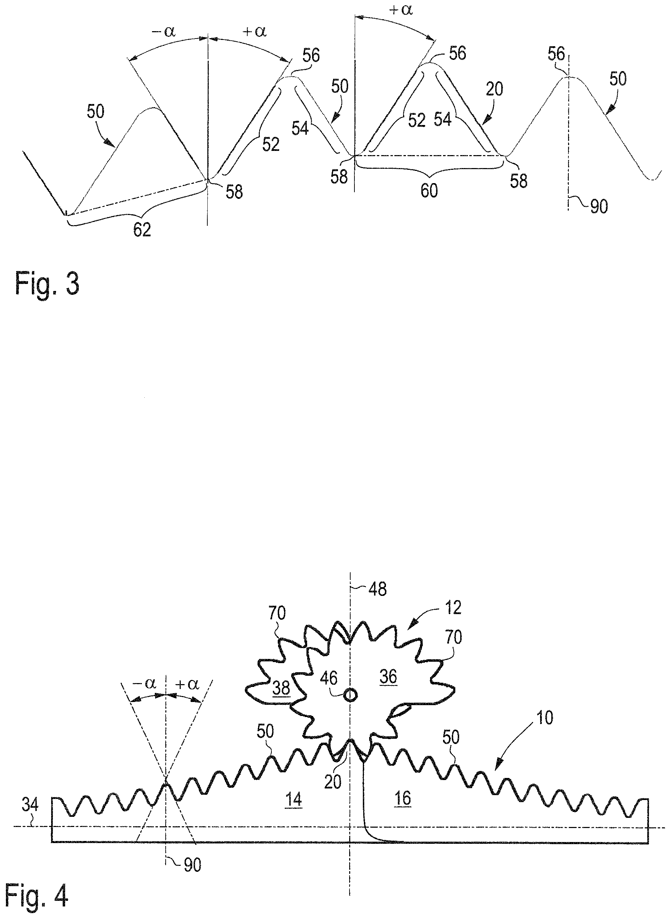

Außer dem Mittelzacken 20 weist jede der drei Zackenrampen 14, 16, 18 eine Mehrzahl weiterer Zacken auf, von denen in den Zeichnungsfiguren einige mit dem Bezugszeichen 50 versehen sind. Beispielsweise können in jeder der drei Zackenrampen 14, 16, 18 außer dem Mittelzacken 20 ungefähr zehn weitere Zacken 50, allgemeiner zwischen sieben und dreizehn weitere Zacken 50, vorgesehen sein. Jeder Zacken 20, 50 weist, wie in Fig. 3 gezeigt, eine ungefähr geradlinige erste Flanke 52 und eine ungefähr geradlinige zweite Flanke 54 auf, zwischen denen eine abgerundete Spitze 56 ausgebildet ist. Zwischen einer ersten Flanke 52 eines ersten Zackens 20, 50 und einer angrenzenden zweiten Flanke 54 eines angrenzenden zweiten Zackens 20, 50 ist jeweils ein abgerundetes Tal 58 ausgebildet. Eine Zackenbasis 60, 62 erstreckt sich jeweils zwischen zwei Tälern 58 eines Zackens 20, 50. Bei dem Mittelzacken 20 sind die geradlinigen ersten und zweiten Flanken 52, 54 gleich lang, und die Zackenbasis 60 verläuft waagerecht, also parallel zu der Basisebene 32 und der Längsrichtung 34. Bei Zacken 50, die sich von dem Mittelzacken 20 unterscheiden, sind die geradlinigen ersten und zweiten Flanken 52, 56 unterschiedlich lang, je nach der Schräge der Zackenbasis 62 relativ zu der Basisebene 32 und der Längsrichtung 34.

Eine über die Längserstreckung einer Zackenrampe 14, 16, 18 gemittelte Neigungsebene 64, wie sie in Fig. 1 beispielhaft für die Zackenrampe 16 gezeigt ist, kann beispielsweise einen Winkel von ungefähr 15° relativ zu der Basisebene 32 und der Längsrichtung 34 aufweisen, oder allgemeiner einen Winkel zwischen 8° und 25°, oder einen Winkel zwischen 10° und 20°. Der Winkel der Neigungsebene 64 entspricht dem gemittelten Winkel der zugeordneten Zackenbasen 62. Lokal können jedoch Abweichungen vorhanden sein, weil in vielen Ausführungsformen die Zackenrampen 14, 16, 18 nicht geradlinig geneigt sind, sondern lokale Korrekturen aufweist. Diese Korrekturen können z.B. zum Ausgleich einer Fahrwerksprogression und/oder eines Kardangelenkfehlers dienen.

Jede erste Flanke 52 eines Zackens 20, 50 bildet bezüglich der Mittelebene 48 einen ersten Flankenwinkel, und jede zweite Flanke 54 bildet bezüglich der Mittelebene 48 einen zweiten Flankenwinkel. Eine wesentliche Eigenschaft der erfindungsgemäß vorgesehenen Zacken 20, 50 ist es, dass zumindest für einen Großteil der insgesamt vorhandenen Zacken 20, 50 alle ersten Flankenwinkel einen einzigen ersten Winkelwert +α aufweisen, und alle zweiten Flankenwinkel einen einzigen zweiten Winkelwert -α aufweisen, der einer Spiegelung des ersten Winkelwertes +α an der Mittelebene 48 entspricht. So beträgt beispielsweise in dem in Fig. 1 gezeigten Ausführungsbeispiel für jeden gezeigten Zacken 20, 50 der erste Winkelwert +33°, und der zweite Winkelwert beträgt entsprechend -33°, jeweils mit einer zulässigen Abweichung von ±10% oder ±5% oder ±2%.

Die Eigenschaft, dass die ersten und zweiten Flankenwinkel Winkelwerte von +α bzw. -α aufweisen, gilt in unterschiedlichen Ausgestaltungen für mindestens 50% der Zacken 20, 50, oder für mindestens 70% der Zacken 20, 50, oder für mindestens 80% der Zacken 20, 50, oder für mindestens 90% der Zacken 20, 50, oder für alle Zacken 20, 50. Ferner sind Ausführungsformen vorgesehen, in denen sich die genannten Prozentzahlen nur auf diejenigen Zacken 50 beziehen, die jeweils eine relativ zu der Basisebene 32 und der Längsrichtung 34 geneigte Zackenbasis 62 aufweisen. Mit anderen Worten werden der Mittelzacken 20 und gegebenenfalls weitere Zacken, deren Zackenbasis parallel zu der Basisebene 32 verläuft, in diesen Ausführungsformen bei der Berechnung der Prozentzahlen nicht berücksichtigt.

Die ersten und zweiten Winkelwerte können in unterschiedlichen Ausführungsformen unterschiedlich, aber für jede Ausführungsform mit gleichen Absolutbeträgen, gewählt werden. So zeigt z.B. Fig. 4 ein Ausführungsbeispiel mit steileren Zahnflanken 52, 54, bei dem für jeden gezeigten Zacken 20, 50 der erste Winkelwert +25° und der zweite Winkelwert -25°, jeweils mit einer zulässigen Abweichung von ±10% oder ±5% oder ±2%, beträgt. Diese Ausgestaltung hat den Vorteil, dass ein größerer Krümmungsradius für die Spitzen 56 und Täler 58 der Zacken 20, 50 gewählt werden kann. Es versteht sich, dass in weiteren Ausgestaltungen weitere erste und zweite Winkelwerte möglich sind, beispielsweise ±25°±5% oder ±30°±10% oder ±30°±5% oder ±33°±5% oder ±35°±10% oder ±35°±5%.

Die Ritzelbauteile 36, 38, 40 weisen ebenfalls Zacken auf, von denen manche in den Zeichnungsfiguren mit dem Bezugszeichen 70 versehen sind. Die Zacken 70 sind so angeordnet und geformt, dass sie in die Zacken 20, 50 der Zackenrampen 14, 16, 18 eingreifen und eine harmonische Abrollbewegung ergeben. Beispielsweise können die Zacken 70 gekrümmte Flanken im Sinne einer Evolventenverzahnung oder Zykloidenverzahnung aufweisen. Es ergeben sich eine erste Wälzkurve 72 an der in Fig. 1 links gezeigten ersten Zackenrampe 14, eine zweite Wälzkurve 74 an der in Fig. 1 rechts gezeigten zweiten Zackenrampe 16, sowie entsprechende dritte und vierte Wälzkurven 76, 78 an dem ersten bzw. zweiten Ritzelelement 36, 38. Gemittelt über die Länge der ersten und zweiten Zackenrampe 14, 16 folgt der Verlauf der ersten und der zweiten Wälzkurve 72, 74 jeweils der Neigung der entsprechenden Zackenrampe 14, 16, wie z.B. durch die Neigungsebene 64 veranschaulicht.

In den hier beschriebenen Ausführungsformen ist das Andruckelement 28 federbelastet und stellt einen relativ großen Federweg von z.B. 0,1 mm oder 0,2 mm bereit. Es besteht daher ein erheblicher Spielraum für Herstellungstoleranzen und/oder gezielt vorgenommene Abweichungen zur Optimierung des Lenkverhaltens.

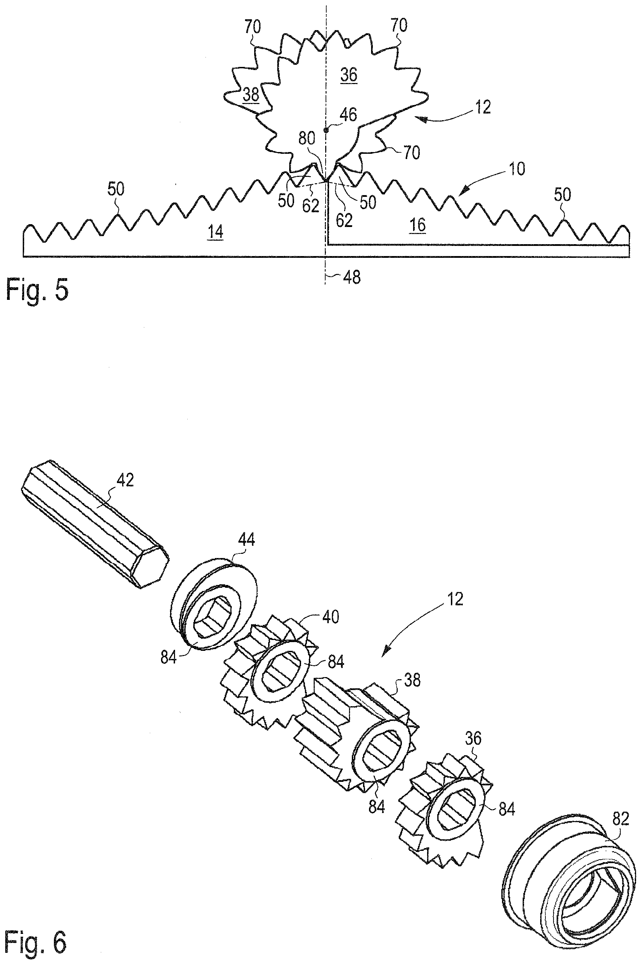

Wie bereits erwähnt, sind auch Ausgestaltungen vorgesehen, in denen das gezackte Bauteil 10 keinen Mittelzacken 20 aufweist. Fig. 5 zeigt ein entsprechendes Ausführungsbeispiel. Die erste und zweite Zackenrampe 14, 16 enden hier links bzw. rechts der Mittelebene 48 mit je einem Zacken 50, der keinen Mittelzacken 20 darstellt, weil er eine geneigte Zackenbasis 62 aufweist. Dagegen weist das Ritzelbauteil 12 einen Mittelzacken 80 auf, der in allen drei Ritzelelementen 36, 38, 40 ausgebildet ist, und der in Mittelstellung des Lenkgetriebes, wie in Fig. 5 dargestellt, symmetrisch zur Mittelebene 48 verläuft und zwischen die beiden genannten Zacken 50 links und rechts der Mittelebene 48 eingreift.

In dem in Fig. 5 gezeigten Ausführungsbeispiel ist der links an die Mittelebene 48 angrenzende Zacken 50 nur in der ersten Zackenrampe 14 (sowie in der in Fig. 5 nicht sichtbaren dritten Zackenrampe 18) ausgebildet. Entsprechend ist der rechts an die Mittelebene 48 angrenzende Zacken 50 nur in der zweiten Zackenrampe 16 ausgebildet. Es sind jedoch auch Ausgestaltungen vorgesehen, bei denen die beiden genannten Zacken 50 über alle drei Zackenrampen 14, 16, 18 hinweg ausgebildet sind, so dass sich die Zackenrampen 14, 16, 18 im Bereich dieser beiden Zacken 50 überlappen.

Die auseinandergezogene Darstellung des Ritzelbauteils 12 in Fig. 6 veranschaulicht die Verwendung eines Lenkwellen-Endstücks 42 mit unrundem Querschnitt, auf das die drei Ritzelelemente 36, 38, 40 aufgepresst und somit in der gewünschten Winkelposition zueinander gehalten werden. Beiderseits des durch die drei Ritzelelemente 36, 38, 40 gebildeten Pakets sind je ein Lager, nämlich das Lenkwellenlager 44 und ein weiteres Lager 82, vorgesehen. Abstandshalter 84 sorgen für einen gewünschten Abstand zwischen den Ritzelelementen 36, 38, 40, um einen erwünschten Freigang zwischen den Ritzelelementen 36, 38, 40 und den Zackenrampen 14, 16, 18 sicherzustellen und beispielsweise zu verhindern, dass das zweite Ritzelement 38 seitlich an einer der beiden Zackenrampen 14, 18 schleift. In dem in Fig. 6 gezeigten Ausführungsbeispiel sind die Abstandshalter 84 als Vorsprünge oder Verdickungen auf den Ritzelelementen 36, 38, 40 und den Lagern 44, 82 ausgebildet. Es sind jedoch auch Ausgestaltungen vorgesehen, bei denen separate Scheiben oder sonstige Bauteile, ähnlich wie Beilagscheiben, als Abstandshalter 84 dienen.

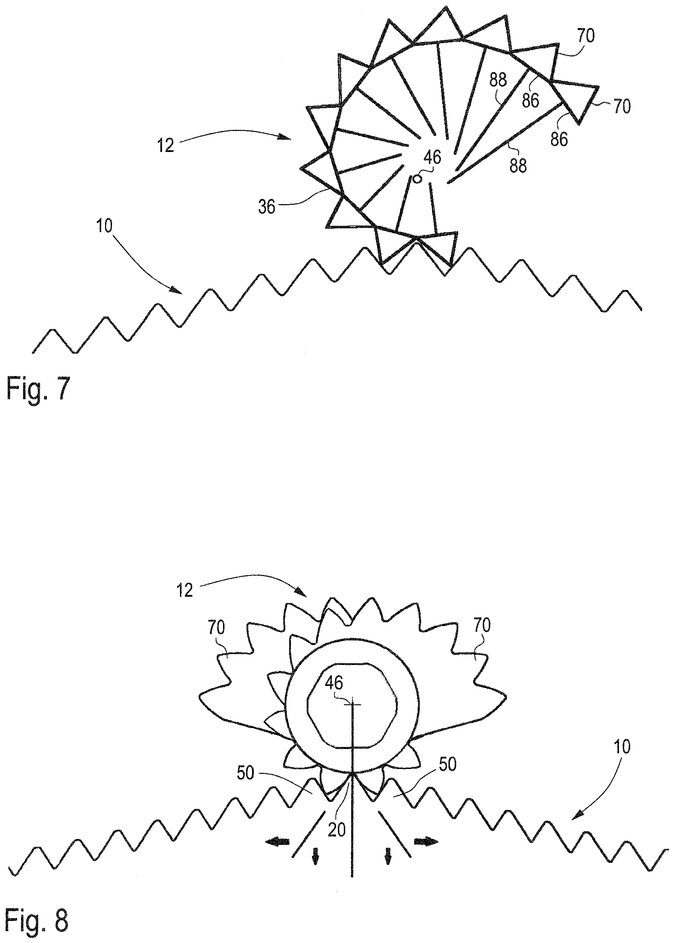

Fig. 7 veranschaulicht beispielhaft die Auslegung eines Ritzelelements, z.B. des ersten Ritzelelements 36. Jeder Zacken 70 weist eine Zackenbasis 86 auf, deren Neigung ungefähr der Neigung der Wälzkurve 76 (Fig. 1) bei dem jeweiligen Zacken 70 entspricht. Eine jeweilige Normale 88 zu jeder Zackenbasis 86 verläuft nicht durch die Drehachse 46, sondern seitlich daran vorbei.

Das hier beschriebene Lenkgetriebe hat eine progressive Übersetzungscharakteristik. In einer Mittelstellung des Lenkgetriebes erlaubt die Lenkung feinfühlige Steuerbewegungen, weil der Abstand zwischen der Drehachse 46 des Ritzelbauteils 12 und dem Wälzpunkt zwischen den Wälzkurven 72, 74, 76, 78 gering ist. Mit zunehmender Auslenkung wird des Abstand zwischen der Drehachse 46 und dem Wälzpunkt immer größer, so dass relativ geringe Bewegungen des Lenkrades zu relativ großen Verschiebungen des gezackten Bauteils 10 führen. Dies ist insbesondere für Rangier- und Einparkvorgänge hilfreich.

In manchen Ausführungsformen ist vorgesehen, dass die Wälzkurven 72, 74 des gezackten Bauteils 10 geradlinig (aber geneigt) verlaufen und die Wälzkurven 76, 78 des Ritzelbauteils 12 spiralförmig verlaufen. Das Übersetzungsverhältnis des Lenkgetriebes verändert sich dann proportional zum Winkel, um den das Ritzelbauteil 12 gegenüber seiner Mittelstellung (Fig. 1) gedreht ist. In der praktischen Erprobung hat sich aber herausgestellt, dass es vorteilhaft sein kann, Abweichungen zu berücksichtigen, die z.B. durch den Kardanfehler eines Kardangelenks in der Lenkwelle und/oder durch die Fahrwerksprogression eines Fahrzeugs verursacht werden. Es sind daher auch Ausgestaltungen vorgesehen - wie z.B. in den Zeichnungsfiguren gezeigt -, bei denen derartige Abweichungen mittels nicht-geradliniger Wälzkurven 72, 74 des gezackten Bauteils 10 korrigiert werden.

Je nach der Art der zu korrigierenden Abweichungen können die nicht-geradlinigen Wälzkurven 72, 74 zueinander spiegelsymmetrisch oder nicht-symmetrisch sein. Die Wälzkurven 76, 78 des Ritzelbauteils 12 sind entsprechend angepasst.

Die hier beschriebene Geometrie des gezackten Bauteils 10 unterscheidet sich insbesondere dadurch von den aus der WO 2006/079492 A1 bekannten Ausgestaltungen, dass zumindest für einen Großteil der Zacken 20, 50 eine Winkelhalbierende 90 des jeweiligen Zackens 20, 50 parallel zu der Mittelebene 48 verläuft, also senkrecht zu der Längsrichtung 34 und/oder der Basisebene 32 steht. Dies gilt zumindest für einen Großteil derjeniger Zacken 50, deren Zackenbasis 62 gegenüber der Längsrichtung 34 und/oder der Basisebene 32 geneigt ist. Bei den aus der WO 2006/079492 A1 bekannten Ausgestaltungen stehen dagegen die Winkelhalbierenden aller Zähne senkrecht zu den jeweiligen Tangenten der Wälzkurve bei dem jeweiligen Zahn.

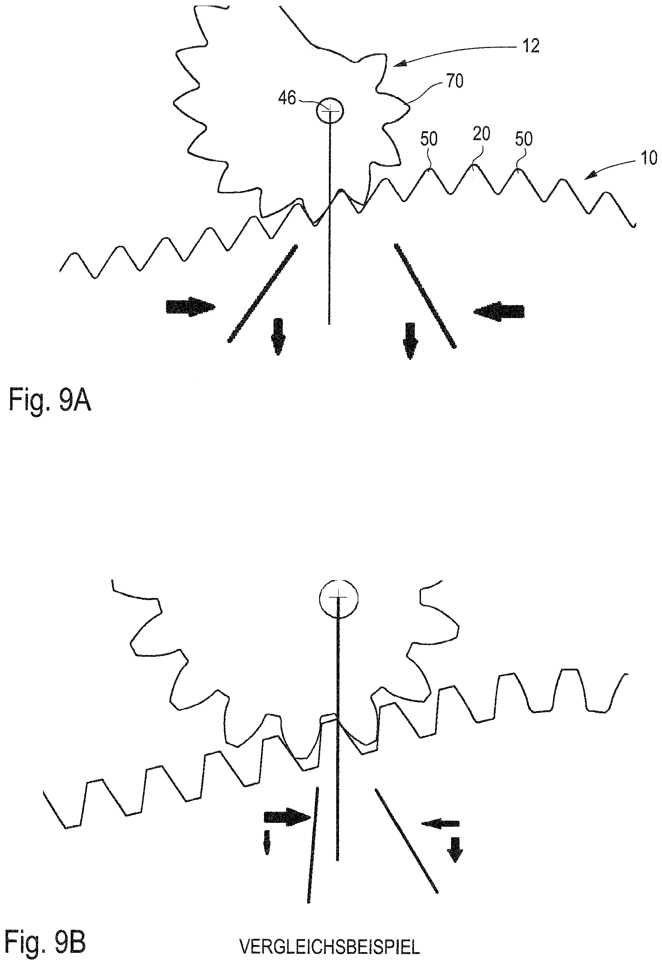

Die erfindungsgemäße Ausbildung ermöglicht ein besonders harmonisches und sicheres Fahr- und Lenkgefühl. Dies liegt insbesondere daran, dass Gegenkräfte, die z.B. durch Rückstellkräfte des Fahrwerks oder Straßeneinflüsse hervorgerufen werden und die in beiden Richtungen auftreten können, gleichmäßig an das Lenkrad zurückgemeldet werden. Dies ist für die Mittelstellung der Lenkung in Fig. 8 und für eine eingelenkte Stellung in Fig. 9A veranschaulicht. Fig. 9B zeigt die eingelenkte Stellung wie in Fig. 9A für ein Vergleichsbeispiel mit einer an sich bekannten Zahnform einer Zahnstange und eines Stirnzahnrades, bei dem für jeden Zahn eine Winkelhalbierende der Zahnflanken normal zu der Basis des Zahns ausgerichtet ist. Bei dem Vergleichsbeispiel gemäß Fig. 9B werden die Gegenkräfte, wie durch die horizontalen Pfeile in Fig. 9B gezeigt, je nach der Richtung der Gegenkraft ungleichmäßig zum Lenkrad zurückgekoppelt. Im Gegensatz dazu sind gemäß Fig. 8 und Fig. 9A die durch die horizontalen Pfeile dargestellten Kräfte, die zu dem Lenkrad zurückgekoppelt werden, unabhängig von der Richtung, in der diese Kräfte einwirken.

Entsprechendes gilt für den Anteil der Gegenkräfte, der in das Andruckelement 28 eingekoppelt wird, wie in Fig. 8, Fig. 9A und Fig. 9B durch die vertikalen Pfeile gezeigt. Da das Andruckelement 28 federbelastet ist und einen relativ großen Federweg von z.B. 0,2 mm bereitstellt, verändert jede Krafteinkopplung in das Andruckelement 28 den Lenkeindruck. Es ist daher vorteilhaft, wenn der Anteil der in das Andruckelement 28 eingekoppelten Kräfte unabhängig davon ist, ob diese Kräfte das gezackte Bauteil 10 nach rechts oder nach links drücken.

Insgesamt werden dank der gleichmäßigen Flankenbelastung störende Schwankungen zwischen Lenkkraft und Gegenkraft (z.B. Rückstellkraft) ausgeglichen. Dadurch ergibt sich ein harmonischeres und sichereres Lenk- und Fahrgefühl mit einem besonders guten Feedback der Lenkung.

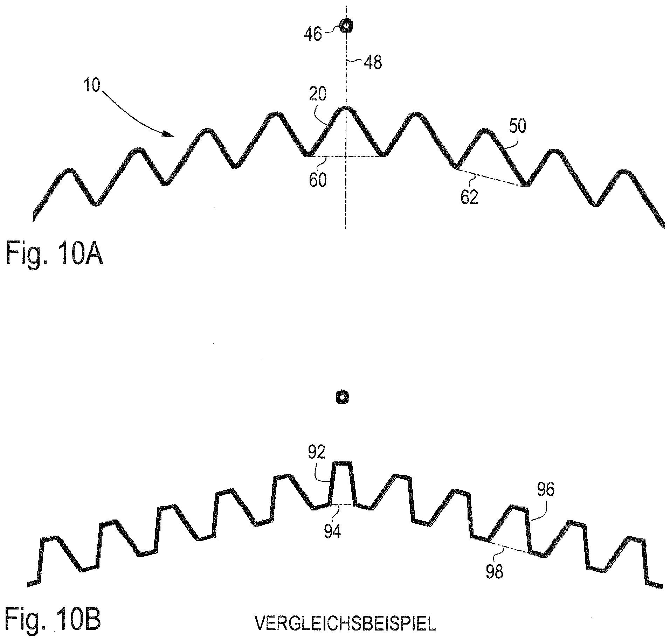

Ein weiterer Vorteil in manchen Ausführungsformen der Erfindung ist, dass die hier beschriebene Zackengeometrie einen zumindest regulär starken oder sogar verstärkten Mittelzacken 20 ermöglicht. Dies ist in Fig. 10A gezeigt, gemäß der die Zackenbasis 60 des Mittelzackens 20 mindestens so lang wie die Zackenbasis 62 eines seitlichen Zackens 50 - und in dem Ausführungsbeispiel von Fig. 10A sogar etwas länger - ist. Dies erhöht die Stabilität des starker Beanspruchung ausgesetzten Mittelzackens 20 und stellt somit einen weiteren erheblichen Vorteil der hier beschriebenen Ausführungsformen dar.

Fig. 10B zeigt ein Vergleichsbeispiel mit einer an sich bekannten Zahnform einer Zahnstange, bei dem eine Zahnbasis 94 eines Mittelzahns 92 deutlich kürzer als eine Zahnbasis 98 eines seitlichen Zahns 96 ist. Somit ist bei diesem Vergleichsbeispiel der Mittelzahn 92 deutlich schwächer als die seitlichen Zähne 96.

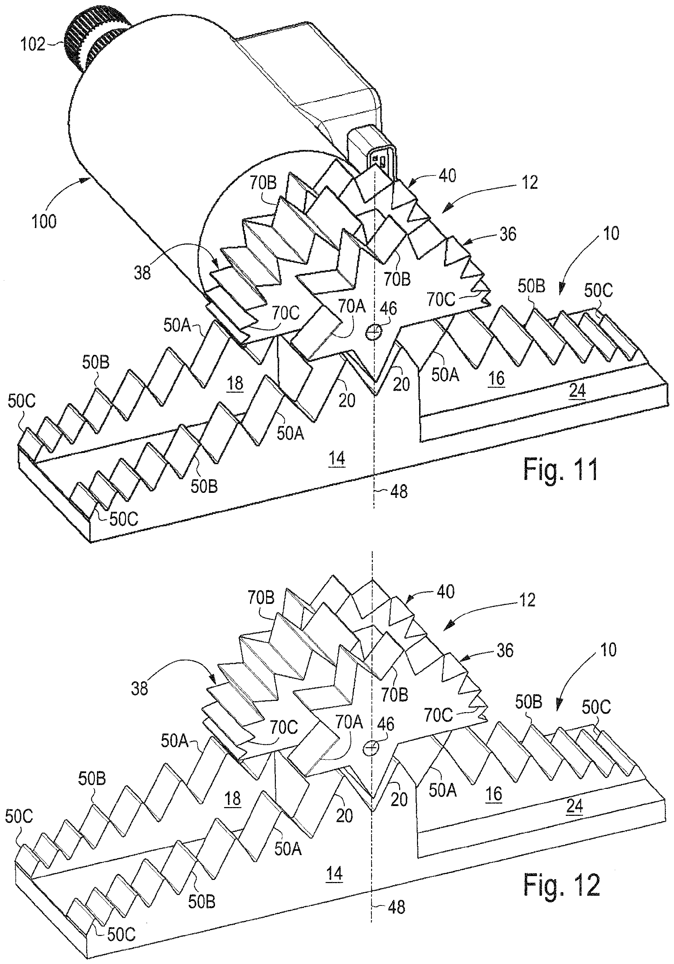

In Fig. 11 und Fig. 12 ist ein weiteres Ausführungsbeispiel eines Lenkgetriebes gezeigt, bei dem gegenüber den bisher beschriebenen Ausführungsbeispielen zwei Änderungen vorgenommen wurden. Diese beiden Änderungen sind erstens, dass das Lenkgetriebe einen Motor 100 mit einer mit dem Ritzelbauteil 12 drehfest oder über ein Getriebe verbundenen Motorwelle aufweist, und zweitens, dass in dem gezackten Bauteil 10 und dem Ritzelbauteil 12 Zacken 50A, 50B, 50C, 70A, 70B, 70C unterschiedlicher Größe vorgesehen sind. Die beiden genannten Änderungen wirken vorteilhaft zusammen, sind jedoch auch jeweils für sich allein einsetzbar. Der Offenbarungsgehalt des vorliegenden Dokuments umfasst daher auch Ausführungsformen wie bislang beschrieben (Figuren 1-12), die derart abgewandelt sind, dass sie nur den Motor 100 oder nur Zacken 50A, 50B, 50C, 70A, 70B, 70C unterschiedlicher Größe oder beides aufweisen.

Bereits in Fig. 10A war eine Ausführungsvariante dargestellt, bei der der Mittelzacken 20 eine längere Zackenbasis 60 als die Zackenbasis 62 der sonstigen Zacken 50 aufweist. In dem gezackten Bauteil 10 gemäß Fig. 11 und Fig. 12 sind jedoch auch die Zacken 50A, 50B, 50C unterschiedlich dimensioniert, also weisen z.B. unterschiedlich lange Zackenbasen und/oder unterschiedliche Zackenhöhen auf. In der Ausgestaltung gemäß Fig. 11 und Fig. 12 sind die beidseitig an die Mittelzacken 20 angrenzenden Zacken 50A am größten und die Zacken 50C an beiden Enden des gezackten Bauteils 10 am kleinsten ausgestaltet. Die Größe der dazwischenliegenden Zacken 50B nimmt mit zunehmender Entfernung von der Mittelebene 48 gleichmäßig oder stufenweise ab.

In anderen Ausgestaltungen ist der Größenverlauf der Zacken 50A, 50B, 50C dagegen entgegengesetzt der Darstellung in Fig. 11 und Fig. 12, so dass die Zacken 50A (sowie ein oder mehrere gegebenenfalls vorhandene Mittelzacken 20) am kleinsten sind, die Zacken 50C an den Enden des gezackten Bauteils 10 am größten sind, und dazwischenliegende Zacken 50B mit zunehmender Entfernung von der Mittelebene 48 gleichmäßig oder stufenweise größer werden. Auch andere Größenverläufe sind in weiteren Ausführungsformen vorgesehen. Dies umfasst, ist aber nicht beschränkt auf, Größenverläufe, bei denen die dazwischenliegenden Zacken 50B größer als sowohl die nahe der Mitte befindlichen Zacken 50A als auch die äußeren Zacken 50C sind, sowie Größenverläufe, bei denen die dazwischenliegenden Zacken 50B kleiner als sowohl die nahe der Mitte befindlichen Zacken 50A als auch die äußeren Zacken 50C sind.

Bis auf die unterschiedlichen Größen wiesen die Mittelzacken 20 und die Zacken 50A, 50B, 50C die Eigenschaften der bislang beschriebenen Ausführungsbeispiele auf. Insbesondere sind auch bei dem Ausführungsbeispiel nach Fig. 11 und Fig. 12 die Flankenwinkel aller Zacken 50A, 50B, 50C gleich bzw. an der Mittelebene 48 gespiegelt. Es versteht sich, dass in allen hier beschriebenen Ausführungsformen wahlweise ein Mittelzacken 20 (wie in Fig. 1 gezeigt) oder zwei Mittelzacken 20 (wie in Fig. 11 und Fig. 12 gezeigt) oder kein den Zackenrampen 14, 16, 18 gemeinsamer Mittelzacken (wie in Fig. 5 gezeigt) vorgesehen sein kann / können.

Die Zacken 70A, 70B, 70C der Ritzelelemente 36, 38, 40 sind jeweils entsprechend den Zacken 50A, 50B, 50C der Zackenrampen 14, 16, 18 geformt und daher auch in unterschiedlichen Größen ausgebildet.

Der in Fig. 11 ferner dargestellte Motor 100 zur Lenkkraftunterstützung ist beispielsweise als getriebeloser Elektromotor ausgestaltet, dessen Motorwelle drehfest mit dem Ritzelbauteil 12 verbunden ist. Die Motorwelle ist im Ausführungsbeispiel gemäß Fig. 11 in die Lenkwelle integriert und bildet einen Abschnitt der Lenkwelle; in Fig. 11 ist ein Lenkwellen-Ansatzstück 102 gezeigt. Mit anderen Worten trägt dieser Abschnitt der Lenkwelle eine Rotorbaugruppe (Spule und/oder Permanentmagnet) des Motors 100. Wegen der progressiven Wirkung des erfindungsgemäßen Lenkgetriebes ist bei dem in Fig. 11 gezeigten Ausführungsbeispiel kein Untersetzungsgetriebe vorgesehen. Wenn der Motor 100 stromlos geschaltet ist, behindert er weder die Lenkbewegungen noch taktile Rückmeldungen des Lenkgetriebes über den Straßenzustand an den Fahrer.

In Ausführungsalternativen kann der Motor 100 über ein Untersetzungsgetriebe mit der Lenkwelle verbunden sein. Dies kann z.B. ein Planetengetriebe (Umlaufrädergetriebe) sein, dessen Zentralrad von der Lenkwelle gebildet wird oder mit dieser fest verbunden ist, und dessen Hohlrad mit dem Rotor des Motors 100 fest verbunden ist. Ein solches Planetengetriebe kann beispielsweise ein Untersetzungsverhältnis von 1:5 bis 1:20 (vorzugsweise ungefähr 1:10) aufweisen, so dass es bei stromlosem Motor 100 Rückmeldungen des Lenkgetriebes an den Fahrer nicht oder nur kaum behindert. In weiteren Ausführungsalternativen kann statt des Planetengetriebes ein Kegelradgetriebe oder ein Stirnzahnradgetriebe eingesetzt werden.

Ausgestaltungen wie in Fig. 11 und Fig. 12 gezeigt, bei denen die Zacken 50A, 50B, 50C, 70A, 70B, 70C unterschiedliche Größen aufweisen, erlauben die Übertragung größerer Drehmomente bei ausgewählten Lenkwinkeln. Dies können z.B. Lenkwinkel sein, bei denen typischerweise höhere Lenkkräfte anfallen, und/oder Lenkwinkel, bei denen eine besonders hohe Lenkkraftunterstützung durch den Motor 100 erfolgt. Alternativ oder zusätzlich kann bei Ausgestaltungen mit unterschiedlich großen Zacken 50A, 50B, 50C, 70A, 70B, 70C ein Werkzeug, mit dem die Zackenrampen 14, 16, 18 und/oder die Ritzelelemente 36, 38, 40 hergestellt werden, optimiert und/oder vereinfacht werden. So kann beispielsweise in manchen Ausführungsformen die Anzahl der Zacken 50A, 50B, 50C, 70A, 70B, 70C bei gleichbleibender Lenkqualität reduziert werden, indem die Zacken unterschiedlich groß ausgebildet werden. Eine geringere Anzahl von Zacken 50A, 50B, 50C, 70A, 70B, 70C vereinfacht die Herstellung und benötigt nur ein weniger aufwändiges Werkzeug.

Das gezackte Bauteil 10 kann in manchen Ausführungsformen durch Schmieden oder Fließpressen oder Fließziehen oder Sintern gefertigt werden. Insbesondere, wenn Schmiedeverfahren oder Fließpressverfahren oder Fließziehverfahren angewendet werden, hat die hier beschriebene Zackengometrie wegen der Einheitlichkeit der Flankenwinkel und ihrer symmetrischen Ausrichtung zu der Mittelebene 48 den Vorteil, dass ein Werkzeug leicht von dem bearbeiteten gezackten Bauteil 10 abgezogen werden kann. Dies ermöglicht eine kostengünstigere Herstellung.

In weiteren Ausführungsformen wird jedes Ritzelelement 36, 38, 40 durch Fließpressen oder Fließziehen oder Stanzen gefertigt. Die einzelnen Elemente 36, 38, 40 werden dann, wie in Fig. 6 veranschaulicht, auf das Lenkwellen-Endstück 42 aufgepresst.

Allgemein ist die Erfindung nicht auf die Verwendung der oben genannten Verfahren eingeschränkt, sondern es könnten alle Verfahren zur Herstellung von Volumenkörpern, mit oder ohne mechanische Nachbearbeitung, eingesetzt werden. Dies schließt z.B. auch 3D-Druck oder Feinguss ein, ist aber nicht darauf beschränkt.

Wegen der erfindungsgemäßen Zackenform ist in manchen Ausführungsformen nur eine relative geringe Oberflächengüte der Zacken 20, 50 des gezackten Bauteils 10 und/oder der Zacken 70, 80 der Ritzelbauteils 12 erforderlich. Beispielsweise kann es ausreichen, wenn diese Zacken 20, 50, 70, 80 die Rauheit "geschruppt" (Rₐ zwischen 3,2 µm und 25 µm) aufweisen. In manchen Ausgestaltungen kann die Rauheit Rₐ bis zu 16 µm oder ungefähr 16 µm betragen. Eine solche relativ große Rauheit kann manche Herstellungsverfahren (z.B. 3D-Druck ohne Nachbearbeitung) kostengünstiger machen oder erst ermöglichen. Auch hat eine relativ große Rauheit den Vorteil, dass sich Schmierfett besser an den Flanken der Zacken 20, 50, 70, 80 hält.

Die in der obigen Beschreibung genannten und in den Zeichnungen dargestellten Einzelheiten sollen nicht als Einschränkung des Erfindungsbereichs, sondern als Beispiele einiger Ausführungsformen der Erfindung angesehen werden. Weitere Abwandlungen sind für den Fachmann unmittelbar ersichtlich. So können insbesondere Merkmale der oben beschriebenen Ausführungsformen miteinander kombiniert werden, um weitere Ausgestaltungen der Erfindung zu erhalten. Der Erfindungsbereich soll demgemäß nicht durch die beschriebenen Ausführungsbeispiele, sondern durch die Ansprüche und ihre Äquivalente definiert werden.

### BEZUGSZEICHENLISTE

- 10: gezacktes Bauteil
- 12: Ritzelbauteil
- 14: erste Zackenrampe
- 16: zweite Zackenrampe
- 18: dritte Zackenrampe
- 20: Mittelzacken (der Zackenrampen)
- 22: Basis
- 24: Seitenabschnitt
- 26: Trägerabschnitt
- 28: Andruckelement
- 30: Gelenkstück
- 32: Basisebene
- 34: Längsrichtung
- 36: erstes Ritzelelement
- 38: zweites Ritzelelement
- 40: drittes Ritzelelement
- 42: Lenkwellen-Endstück
- 44: Lenkwellenlager
- 46: Drehachse
- 48: Mittelebene
- 50: Zacken (der Zackenrampen)
- 50A, 50B, 50C: Zacken (der Zackenrampen) in Fig. 11 und Fig. 12
- 52: erste Flanke
- 54: zweite Flanke
- 56: Spitze
- 58: Tal
- 60: Zackenbasis (des Mittelzackens 20)
- 62: Zackenbasis (eines Zackens 50)
- 64: Neigungsebene
- 70: Zacken (der Ritzelelemente)
- 70A, 70B, 70C: Zacken (der Ritzelelemente) in Fig. 11 und Fig. 12
- 72: erste Wälzkurve (der ersten Zackenrampe)
- 74: zweite Wälzkurve (der zweiten Zackenrampe)
- 76: dritte Wälzkurve (des ersten Ritzelelements)
- 78: vierte Wälzkurve (des zweiten Ritzelelements)
- 80: Mittelzacken (der Ritzelelemente in Fig. 5)
- 82: Lager
- 84: Abstandshalter
- 86: Zackenbasis (der Zacken der Ritzelelemente)
- 88: Normale
- 90: Winkelhalbierende
- 92: Mittelzahn (des Vergleichsbeispiels von Fig. 10B)
- 94: Zahnbasis (des Mittelzahns 92 im Vergleichsbeispiel von Fig. 10B)
- 96: Zahn (des Vergleichsbeispiels von Fig. 10B)
- 98: Zahnbasis (des Zahns 96 im Vergleichsbeispiel von Fig. 10B)
- 100: Motor
- 102: Lenkwellen-Ansatzstück

## Patentansprüche

1. Gezacktes Bauteil (10) zur Verwendung in einem progressiven Lenkgetriebe, mit einer ersten und einer zweiten geneigten Zackenrampe (14, 16), die eine Mehrzahl von Zacken (20, 50) mit je einem ersten Flankenwinkel und einem zweiten Flankenwinkel bezüglich einer normal zu einer Längsrichtung (34) des gezackten Bauteils (10) verlaufenden Mittelebene (48) aufweisen,
**dadurch gekennzeichnet, dass**
für zumindest 50% der Zacken (20, 50) aus der Mehrzahl von Zacken (20, 50) die ersten Flankenwinkel einen einzigen ersten Winkelwert aufweisen und die zweiten Flankenwinkel einen einzigen zweiten Winkelwert aufweisen, wobei der erste Winkelwert einer Spiegelung des zweiten Winkelwerts an der Mittelebene (48) entspricht.

2. Gezacktes Bauteil (10) nach Anspruch 1, **dadurch gekennzeichnet, dass** für zumindest 70% oder zumindest 90% der Zacken (20, 50) aus der Mehrzahl von Zacken (20, 50) die ersten Flankenwinkel den ersten Winkelwert und die zweiten Flankenwinkel den zweiten Winkelwert aufweisen.

3. Gezacktes Bauteil (10) nach Anspruch 1, **dadurch gekennzeichnet, dass** für zumindest 50% oder zumindest 70% oder zumindest 90% derjenigen Zacken (50) aus der Mehrzahl von Zacken (20, 50), die eine gegenüber der Längsrichtung (34) des gezackten Bauteils (10) geneigte Zackenbasis (62) aufweisen, die ersten Flankenwinkel den ersten Winkelwert und die zweiten Flankenwinkel den zweiten Winkelwert aufweisen.

4. Gezacktes Bauteil (10) nach einem der Ansprüche 1 bis 3, **dadurch gekennzeichnet, dass** der erste Winkelwert und der zweite Winkelwert für die Flankenwinkel jedes Zackens (20, 50) eine Abweichung von ±20% zulassen.

5. Gezacktes Bauteil (10) nach einem der Ansprüche 1 bis 3, **dadurch gekennzeichnet, dass** der erste und der zweite Winkelwert x±10% betragen, wobei x ein Wert zwischen 25° und 40° ist.

6. Gezacktes Bauteil (10) nach einem der Ansprüche 1 bis 5, **dadurch gekennzeichnet, dass**:
die erste und die zweite Zackenrampe (14, 16) mit einander entgegengesetzten Neigungen angeordnet sind; und/oder
zumindest manche der Zacken (50A, 50B, 50C) unterschiedliche Größen aufweisen.

7. Gezacktes Bauteil (10) nach einem der Ansprüche 1 bis 6, **dadurch gekennzeichnet, dass**:
die Mittelebene (48) senkrecht auf einer Basisfläche (32) des gezackten Bauteils (10) steht; und/oder
das Bauteil (10) einen Mittelzacken (20) mit einer Zackenbasis (60) aufweist, die größer als eine Zackenbasis (62) je eines seitlich angrenzenden Zackens (50) ist.

8. Gezacktes Bauteil (10) nach einem der Ansprüche 1 bis 7, **dadurch gekennzeichnet, dass** die erste Zackenrampe (14) für eine erste Wälzkurve (72) ausgelegt ist und die zweite Zackenrampe (16) für eine zweite Wälzkurve (74) ausgelegt ist, wobei jede der Wälzkurven (72, 74) schräg zur Mittelebene (48) verläuft und über zumindest 50% ihrer Erstreckung um maximal 10° von einer geradlinigen Wälzkurve abweicht.

9. Gezacktes Bauteil (10) nach einem der Ansprüche 1 bis 7, **dadurch gekennzeichnet, dass** die erste Zackenrampe (14) für eine erste Wälzkurve (72) ausgelegt ist und die zweite Zackenrampe (16) für eine zweite Wälzkurve (74) ausgelegt ist, wobei jede der Wälzkurven (72, 74) bis auf Abweichungen zur Korrektur einer Fahrwerksprogression und/oder eines Kardangelenkfehlers geradlinig und schräg zur Mittelebene (48) verläuft.

10. Gezacktes Bauteil (10) nach einem der Ansprüche 1 bis 7, **dadurch gekennzeichnet, dass** die erste Zackenrampe (14) für eine erste Wälzkurve (72) ausgelegt ist und die zweite Zackenrampe (16) für eine zweite Wälzkurve (74) ausgelegt ist, wobei die erste und die zweite Wälzkurve (72, 74) jeweils nichtgeradlinig sind, und wobei die erste und die zweite Wälzkurve (72, 74) nicht spiegelsymmetrisch zueinander sind.

11. Gezacktes Bauteil (10) nach einem der Ansprüche 1 bis 10, **dadurch gekennzeichnet, dass** die erste Zackenrampe (14) in der Seitenansicht in Blickrichtung in einer Ebene vor einer Ebene der zweiten Zackenrampe (16) angeordnet ist, wobei das gezackte Bauteil (10) vorzugsweise eine dritte Zackenrampe (18) aufweist, die in der Seitenansicht im wesentlichen identisch zu der ersten Zackenrampe (14) ausgebildet und in Blickrichtung in einer Ebene hinter den Ebenen der ersten und der zweiten Zackenrampe (14, 16) angeordnet ist.

12. Progressives Lenkgetriebe mit einem gezackten Bauteil (10) nach einem der Ansprüche 1 bis 11 und einem Ritzelbauteil (12), das mehrere Ritzelelemente (36, 38) aufweist, von denen jedes je einer der Zackenrampen (14, 16) zugeordnet ist und dazu eingerichtet ist, in Abhängigkeit von einem jeweiligen Lenkwinkel mit der zugeordneten Zackenrampe (14, 16) in Eingriff oder außer Eingriff zu kommen.

13. Lenkgetriebe nach Anspruch 12, **dadurch gekennzeichnet, dass**:
das gezackte Bauteil (10) im wesentlichen in der Längsrichtung (34) verschiebbar ist; und/oder
das gezackte Bauteil (10) federbelastet gegen das Ritzelbauteil (12) gedrückt wird und in Richtung der Mittelebene (48) um mindestens 0,1 mm gegenüber dem Ritzelbauteil (12) bewegbar ist.

14. Lenkgetriebe nach Anspruch 12 oder Anspruch 13, **dadurch gekennzeichnet, dass**:
jedes Ritzelelement (36, 38) eine Mehrzahl von Zacken (70) mit je einer Zackenbasis (86) aufweist, deren Normalen (88) an der Drehachse (46) vorbei verlaufen; und/oder
das Lenkgetriebe ferner einen Motor (100) mit einer Motorwelle aufweist, die mit dem Ritzelbauteil (12) drehfest oder über ein Planetengetriebe verbunden ist.

15. Verfahren zur Herstellung eines gezackten Bauteils (10) nach einem der Ansprüche 1 bis 11, **dadurch gekennzeichnet, dass** das gezackte Bauteil (10) durch Schmieden oder Fließpressen oder Fließziehen oder Sintern gefertigt wird.

16. Verfahren zur Herstellung eines Lenkgetriebes nach einem der Ansprüche 12 bis 14, **dadurch gekennzeichnet, dass** das gezackte Bauteil (10) durch Schmieden oder Fließpressen oder Fließziehen oder Sintern gefertigt wird, und/oder dass jedes Ritzelelement (36, 38, 40) durch Fließpressen oder Fließziehen oder Stanzen gefertigt wird.

## Claims

1. A serrated component (10) for use in a progressive steering gear, having first and second inclined prong ramps (14, 16) comprising a plurality of prongs (20, 50) each having a first flank angle and a second flank angle with respect to a center plane (48) that runs normal to a longitudinal direction (34) of the serrated component (10),
**characterized in that**
for at least 50% of the prongs (20, 50) of the plurality of prongs (20, 50), the first flank angles have a single first angular value and the second flank angles have a single second angular value, the first angular value corresponding to a reflection of the second angular value at the center plane (48).

2. The serrated component (10) according to claim 1, **characterized in that**, for at least 70% or at least 90% of the prongs (20, 50) of the plurality of prongs (20, 50), the first flank angles have the first angular value and the second flank angles have the second angular value.

3. The serrated component (10) according to claim 1, **characterized in that**, for at least 50% or at least 70% or at least 90% of those prongs (50) of the plurality of prongs (20, 50) which have a prong base (62) inclined with respect to the longitudinal direction (34) of the serrated component (10), the first flank angles have the first angular value and the second flank angles have the second angular value.

4. The serrated component (10) according to any one of claims 1 to 3, **characterized in that** the first angular value and the second angular value for the flank angles of each prong (20, 50) allow a deviation of ±20%.

5. The serrated component (10) according to any one of claims 1 to 3, **characterized in that** the first and second angular values are x±10%, wherein x is a value between 25° and 40°.

6. The serrated component (10) according to any one of claims 1 to 5, **characterized in that**:
the first and second prong ramps (14, 16) are arranged with opposite inclinations; and/or
at least some of the prongs (50A, 50B, 50C) have different sizes.

7. The serrated component (10) according to any one of claims 1 to 6, **characterized in that**:
the center plane (48) is perpendicular to a base surface (32) of the serrated component (10); and/or
the component (10) has a center prong (20) with a prong base (60) that is larger than a prong base (62) of each laterally adjacent prong (50).

8. The serrated component (10) according to any one of claims 1 to 7, **characterized in that** the first prong ramp (14) is designed for a first rolling curve (72) and the second prong ramp (16) is designed for a second rolling curve (74), each of the rolling curves (72, 74) extending obliquely to the center plane (48) and deviating, over at least 50% of its extension, by at most 10° from a rectilinear rolling curve.

9. The serrated component (10) according to any one of claims 1 to 7, **characterized in that** the first prong ramp (14) is designed for a first rolling curve (72) and the second prong ramp (16) is designed for a second rolling curve (74), each of the rolling curves (72, 74) extending rectilinearly and obliquely to the center plane (48), except for deviations for correcting a running gear progression and/or a Cardan joint error.

10. The serrated component (10) according to any one of claims 1 to 7, **characterized in that** the first prong ramp (14) is designed for a first rolling curve (72) and the second prong ramp (16) is designed for a second rolling curve (74), wherein each of the first and second rolling curves (72, 74) is non-rectilinear, and wherein the first and second rolling curves (72, 74) are not mirror-symmetrical with respect to each other.

11. The serrated component (10) according to any one of claims 1 to 10, **characterized in that** the first prong ramp (14) is arranged, when viewed in side view in a viewing direction, in a plane in front of a plane of the second prong ramp (16), wherein the serrated component (10) preferably comprises a third prong ramp (18) which, in the side view, is formed substantially identical to the first prong ramp (14) and is arranged, in the viewing direction, in a plane behind the planes of the first and second prong ramps (14, 16).

12. A progressive steering gear comprising a serrated component (10) according to any one of claims 1 to 11 and a pinion component (12) comprising a plurality of pinion elements (36, 38), each of which being associated with a respective one of the prong ramps (14, 16) and being configured to engage with or disengage from the associated prong ramp (14, 16) in dependence on a respective steering angle.

13. The steering gear according to claim 12, **characterized in that**:
the serrated component (10) is adapted to be shifted substantially in the longitudinal direction (34); and/or
the serrated component (10) is pressed against the pinion component (12) under spring load and is movable in the direction of the center plane (48) by at least 0.1 mm relative to the pinion component (12).

14. The steering gear according to claim 12 or claim 13, **characterized in that**:
each pinion element (36, 38) has a plurality of prongs (70), each with a prong base (86), wherein respective normals (88) of the plurality of prongs (70) run past the axis of rotation (46); and/or
the steering gear further comprises a motor (100) having a motor shaft which is connected to the pinion component (12) in a rotationally fixed manner or via a planetary gear.

15. A method of manufacturing a serrated component (10) according to any one of claims 1 to 11, **characterized in that** the serrated component (10) is manufactured by forging or impact extrusion or flow drawing or sintering.

16. A method of manufacturing a steering gear according to any one of claims 12 to 14, **characterized in that** the serrated component (10) is manufactured by forging or impact extrusion or flow drawing or sintering, and/or **in that** each pinion element (36, 38, 40) is manufactured by impact extrusion or flow drawing or punching.

## Revendications

1. Composant denté (10) destiné à être utilisé dans un mécanisme de direction progressive, ayant une première et une deuxième rampe à dents inclinée (14, 16), qui présentent une pluralité de dents (20, 50) ayant chacune un premier angle de flanc et un deuxième angle de flanc par rapport à un plan médian (48) s'étendant perpendiculairement à une direction longitudinale (34) du composant denté (10),
**caractérisé par le fait que**,
pour au moins 50 % des dents (20, 50) de la pluralité de dents (20, 50), les premiers angles de flanc présentent une première valeur angulaire unique et les deuxièmes angles de flanc présentent une deuxième valeur angulaire unique, la première valeur angulaire correspondant à un miroir de la deuxième valeur angulaire au plan médian (48).

2. Composant denté (10) selon la revendication 1, **caractérisé par le fait que**, pour au moins 70 % ou au moins 90 % des dents (20, 50) de la pluralité de dents (20, 50), les premiers angles de flanc présentent la première valeur angulaire et les deuxièmes angles de flanc présentent la deuxième valeur angulaire.

3. Composant denté (10) selon la revendication 1, **caractérisé par le fait que**, pour au moins 50 % ou au moins 70 % ou au moins 90 % des dents (50) de la pluralité de dents (20, 50) qui présentent une base de dent (62) inclinée par rapport à la direction longitudinale (34) du composant denté (10), les premiers angles de flanc présentent la première valeur angulaire et les deuxièmes angles de flanc présentent la deuxième valeur angulaire.

4. Composant denté (10) selon l'une des revendications 1 à 3, **caractérisé par le fait que** la première valeur angulaire et la deuxième valeur angulaire pour les angles de flanc de chaque dent (20, 50) permettent un écart de ± 20 %.

5. Composant denté (10) selon l'une des revendications 1 à 3, **caractérisé par le fait que** la première et la deuxième valeur angulaire s'élèvent à x ± 10 %, x étant une valeur entre 25° et 40°.

6. Composant denté (10) selon l'une des revendications 1 à 5, **caractérisé par le fait que** :
- les première et deuxième rampes à dents (14, 16) sont disposées avec des inclinaisons opposées l'une à l'autre ; et/ou
- au moins quelques dents présentent des dimensions différentes.

7. Composant denté (10) selon l'une des revendications 1 à 6, **caractérisé par le fait que** :
- le plan médian (48) est perpendiculaire à une surface de base (32) du composant denté (10) ; et/ou
- le composant (10) présente une dent centrale (20) ayant une base de dent (60) qui est plus grande qu'une base de dent (62) de chaque dent (50) latéralement adjacente.

8. Composant denté (10) selon l'une des revendications 1 à 7, **caractérisé par le fait que** la première rampe à dents (14) est conçue pour une première courbe de roulement (72) et la deuxième rampe à dents (16) est conçue pour une deuxième courbe de roulement (74), chacune des courbes de roulement (72, 74) s'étendant obliquement par rapport au plan médian (48) et s'écartant d'une courbe de roulement rectiligne d'un maximum de 10° sur au moins 50 % de son étendue.

9. Composant denté (10) selon l'une des revendications 1 à 7, **caractérisé par le fait que** la première rampe à dents (14) est conçue pour une première courbe de roulement (72) et la deuxième rampe à dents (16) est conçue pour une deuxième courbe de roulement (74), chacune des courbes de roulement (72, 74) s'étendant de façon rectiligne et obliquement par rapport au plan médian (48), à l'exception des écarts destinés à corriger une progression d'organe de roulement et/ou une erreur de joint de cardan.

10. Composant denté (10) selon l'une des revendications 1 à 7, **caractérisé par le fait que** la première rampe à dents (14) est conçue pour une première courbe de roulement (72) et la deuxième rampe à dents (16) est conçue pour une deuxième courbe de roulement (74), chacune des première et deuxième courbes de roulement (72, 74) étant non rectiligne, et les première et deuxième courbes de roulement (72, 74) ne présentant pas une symétrie miroir l'une de l'autre.

11. Composant denté (10) selon l'une des revendications 1 à 10, **caractérisé par le fait que** la première rampe à dents (14) est disposée dans la vue latérale en direction du regard dans un plan en avant d'un plan de la deuxième rampe à dents (16), le composant denté (10) présentant de préférence une troisième rampe à dents (18) qui, dans la vue latérale, est réalisée sensiblement identique à la première rampe à dents (14) et qui, en direction du regard, est disposée dans un plan derrière les plans de la première et de la deuxième rampe à dents (14, 16).

12. Mécanisme de direction progressive ayant un composant denté (10) selon l'une des revendications 1 à 11 et un composant pignon (12) qui présente une pluralité d'éléments de pignon (36, 38), dont chacun est associé à l'une des rampes à dents (14, 16) et est apte à s'engager avec ou à se désengager d'avec la rampe à dents (14, 16) associée en fonction d'un angle de direction respectif.

13. Mécanisme de direction selon la revendication 12, **caractérisé par le fait que** :
- le composant denté (10) est déplaçable sensiblement dans la direction longitudinale (34) ; et/ou
- le composant denté (10) est sollicité par ressort contre le composant pignon (12) et est déplaçable dans la direction du plan médian (48) d'au moins 0,1 mm par rapport au composant pignon (12).

14. Mécanisme de direction selon la revendication 12 ou la revendication 13, **caractérisé par le fait que** :
- chaque élément de pignon (36, 38) présente une pluralité de dents (70) ayant chacune une base de dent (86) dont les normales (88) passent devant l'axe de rotation (46) ; et/ou
- le mécanisme de direction présente en outre un moteur (100) ayant un arbre de moteur qui est relié au composant pignon (12) de manière solidaire en rotation ou par l'intermédiaire d'un engrenage planétaire.

15. Procédé de fabrication d'un composant denté (10) selon l'une des revendications 1 à 11, **caractérisé par le fait que** le composant denté (10) est fabriqué par forgeage ou extrusion par impact ou extrusion-étirage ou frittage.

16. Procédé de fabrication d'un mécanisme de direction selon l'une des revendications 12 à 14, **caractérisé par le fait que** le composant denté (10) est fabriqué par forgeage ou extrusion ou extrusion-étirage ou frittage, et/ou chaque élément de pignon (36, 38, 40) est fabriqué par extrusion par impact ou extrusion-étirage ou estampage.
